Europäisches Patentamt

European Patent Office

Office européen des brevets

(19)

(11) Veröffentlichungsnummer : **0 457 319 B1**

(12) # EUROPÄISCHE PATENTSCHRIFT

(45) Veröffentlichungstag der Patentschrift :
**22.06.94 Patentblatt 94/25**

(51) Int. Cl.$^5$ : **F16L 55/16, E03F 3/04**

(21) Anmeldenummer : **91107943.2**

(22) Anmeldetag : **16.05.91**

(54) **Dichtungsmuffe und ihre Verwendung.**

(30) Priorität : **18.05.90 DE 4016062**

(43) Veröffentlichungstag der Anmeldung :
**21.11.91 Patentblatt 91/47**

(45) Bekanntmachung des Hinweises auf die
Patenterteilung :
**22.06.94 Patentblatt 94/25**

(84) Benannte Vertragsstaaten :
**AT BE CH DE DK ES FR GB GR IT LI LU NL SE**

(56) Entgegenhaltungen :
**DE-A- 1 675 374**
**DE-A- 3 836 537**
**FR-A- 1 574 638**

(73) Patentinhaber : **HOECHST**
**AKTIENGESELLSCHAFT**
**D-65926 Frankfurt (DE)**

(72) Erfinder : **Hessel, Joachim, Dr.**
**Morgensternstrasse 22**
**W-6073 Egelsbach (DE)**
Erfinder : **Koch, Rolf, Dr.**
**Jahnstrasse 12**
**W-6228 Eltville (DE)**
Erfinder : **Sturm, Wolfgang**
**Auf dem Kreuz 7**
**W-6246 Glashütten (DE)**

## Beschreibung

Die Erfindung bezieht sich auf eine Dichtungsmuffe und ihre Verwendung beim Anschluß von Hausabflußleitungen an die öffentliche Kanalisation.

Üblicherweise werden Hausabflußleitungen in der Weise verlegt, daß zunächst vom Haus zum Sammler ein Graben ausgehoben wird und die Rohre auf die Grabensohle gelegt werden. Der Anschluß an den Sammler erfolgt durch vorgefertigte Abzweigrohre im Sammler.

Wird ein Sammler durch Einziehen eines Kunststoffrohres erneuert ("Relining"), so läßt sich dieses Verfahren nur mit Einschränkungen anwenden, weil einerseits umfangreiche Erdarbeiten eingespart werden müssen und andererseits die Abdichtung der Einmündung der Hausablußleitung in den Sammler schwierig ist.

Es bestand die Aufgabe, ein Anschlußverfahren zu finden, welches einfach durchzuführen ist und eine zuverlässige Abdichtung bewirkt.

Ein älterer Lösungsvorschlag betrifft ein Verfahren zum Anschließen von Hausabflußleitungen an Sammelkanäle und bedient sich einer speziellen Dichtungsmuffe bestehend aus einem rohrförmigen, außen zylindrischen Körper, dessen eine Seite durch eine dünne elastische Membrane verschlossen ist, an dessen der Membrane gegenüberliegenden Seite ein nach außen vorspringender Wulst angebracht ist und dessen Innenwand auf einer Länge von Zweidrittel, gemessen von der Wulstseite, der Gesamtlänge der Muffe zylindrisch ist und dann einen Konus bildet (welcher einem Drittel der Gesamtlänge entspricht), wobei die Wandstärke zur Membrane hin zunimmt (vgl. DE 38 36 537). Das Hausabflußrohr wird samt Dichtungsmuffe von außen in den Sammelkanal eingeführt. Die Dichtungsmuffe-ermöglicht eine Sanierung defekter Hausablußleitungen ohne umfangreiche Erdarbeiten.

Dieses Verfahren befriedigt noch nicht ganz, weil bei dem Eindrittel-Konus nur dickwandige Rohre zuverlässig abgedichtet werden.

Es wurde gefunden, daß die Aufgabe gelöst werden kann, wenn eine Dichtungsmuffe mit einer abgestuft konischen Innenwand verwendet wird.

Die Erfindung betrifft somit eine Dichtungsmuffe, bestehend aus einem rohrförmigen, außen zylindrischen Körper, dessen eine Seite durch eine dünne elastische Membrane verschlossen ist, an dessen der Membrane gegenüberliegenden Seite ein nach außen vorspringender Wulst angebracht ist und dessen Innenwand im wesentlichen zwei abgestufte Konusse bildet, wobei die Wanddicke zur Membrane hin zunimmt und die Steigung ($\beta$) des zweiten, an die Membrane angrenzenden Konusses kleiner ist als die Steigung ($\alpha$) des anderen Konusses, die Verwendung der Dichtungsmuffe und ein Verfahren zum Verbinden einer Hausabflußleitung mit einem Sammelkanal gemäß Anspruch 3.

Die erfindungsgemäße Muffe ist ein rohrförmiger, außen zylindrischer Körper, bei welchem die eine Seite durch eine dünne elastische Membrane verschlossen ist. Auf der der Membrane gegenüberliegenden Seite ist der Rand mit einem nach außen vorspringenden Wulst versehen. Die innere Wand ist abgestuft konisch ausgebildet. Die Wandstärke nimmt von der Wulstseite her zur verschlossenen Seite hin zu.

Die Größe der Dichtungsmuffe richtet sich nach den Durchmessern der zu verbindenden Rohre. Dabei ist die lichte Weite der Dichtungsmuffe abhängig vom Durchmesser der Hausabflußleitung und die Länge der Muffe abhängig vom Durchmesser - und der dadurch vorgegebenen Wandstärke - des Sammlers. Befindet sich beispielsweise in einem Steinzeugsammler ein Reliningrohr aus Kunststoff, so ist die Dichtungsmuffe besonders lang. Die Wandstärke der Muffe an der Wulstseite beträgt 9 bis 10 % der lichten Weite und nimmt zum verschlossenen Ende hin um 11 bis 15 % zu. Die Höhe und die Breite des Wulstes betragen 5 bis 15 %, bezogen auf die lichte Weite. Die Verschlußmembrane ist 0,2 bis 1,0 mm dick, abhängig vom Material, aus welchem die Muffe besteht.

Die Länge des am verschlossenen Ende befindlichen Konusses beträgt etwa 20 bis 30% des Gesamtdurchmessers der Muffe, die Länge des anderen Konusses etwa 40 bis 60% des Gesamt durchmessers der Muffe.

Die erfindungsgemäße Dichtungsmuffe besteht aus einem gummielastischen Material, beispielsweise Polychloropren.

Eine bevorzugte Dichtungsmuffe für eine Hausabflußleitung aus einem 180 mm dicken Rohr aus Polyethylen hat folgende Abmessungen:

EP 0 457 319 B1

| | |
|---|---|
| Lichte Weite an der Wulstseite | 180 mm |
| Lichte Weite an der verschlossenen Seite | 170 mm |
| Wandstärke | 16 bzw. 21 mm |
| Höhe des Wulstes | 15 mm |
| Breite des Wulstes | 6 mm |
| Gesamte Länge | 200 mm |
| Dicke der Abschlußmembrane | 0,5 mm |

Die Dichtungsmuffe ist für Rohre aus konventionellen Materialien, in denen ein Reliningrohr liegt, vorgesehen.

Das Verfahren wird vorzugsweise in der Weise durchgeführt, daß das Hausabflußrohr an dem dem Sammler zugewandten Ende auf der Außenseite zu einem Konus abgeschrägt wird, wobei die Länge und der Winkel des Konusses mit den entsprechenden Abmessungen in der Muffe übereinstimmen. Danach wird das Rohrende bis zum Beginn des ersten Konusses in die Dichtungsmuffe eingeführt. Sodann wird an einer geeigneten Stelle eine Grube ausgehoben und - falls der Sammler nicht begehbar ist - zum Sammler hin - oder vom Sammler - falls der Sammler begehbar ist - zum Haus hin eine zielgenaue Bohrung vorangetrieben. Der Durchmesser dieser Bohrung entspricht im Erdreich mindestens dem Gesamtdurchmesser der Dichtungsmuffe, in der Wand des Sammlers jedoch dem Durchmesser des zylindrischen Teils der Muffe. Das Hausablußrohr wird nunmehr - Muffe voran - vom Haus her durch die Bohrung geschoben, bis die Muffe mit dem Wulst an der Außenseite der Wand des Sammlers anliegt. Beim Weiterschieben des Rohres werden die konischen Flächen der Muffe aufgetrieben und fest gegen die Wandung der Bohrung in der Wand des Sammlers gepreßt und die Abschlußmembrane durchstoßen. Das Muffenmaterial bildet einen ringsumlaufenden Dichtwulst. Das in den Sammler hineinragende konische Rohrende wird in einem ausreichenden Abstand von der Kanalinnenwand - bei nicht begehbarem Kanal mittels eines Schneidroboters - abgeschnitten.

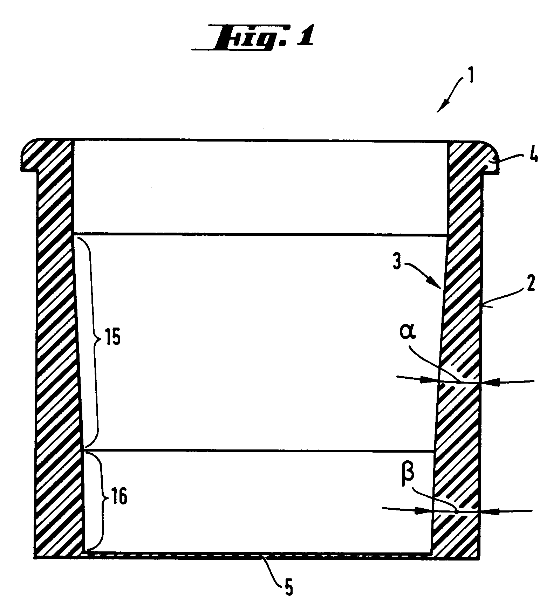

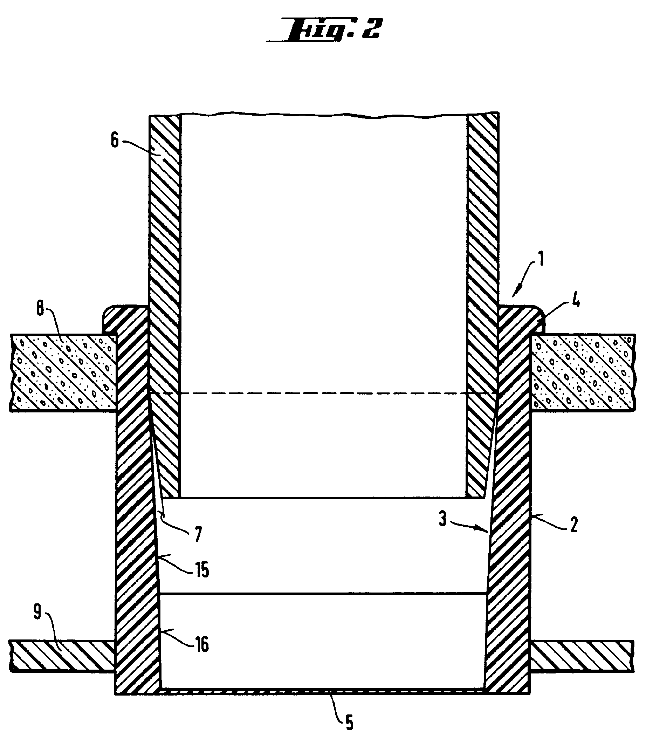

Die Figuren zeigen eine erfindungsgemäße Dichtungsmuffe (Figur 1) und die Vorgänge bei ihrer Anwendung (Figuren 2, 3, 4 und 5).

Die Muffe (1) gemäß Figur 1 hat eine glatte zylindrische Außenwand (2) und eine konische Innenwand (3). Am oberen Rand schließt die Muffe (1) mit einem Wulst (4) ab, während sie unten durch eine Abschlußmembrane (5) verschlossen ist.

Figuren 2, 3, 4 und 5 zeigen den Anschluß einer Hausabflußleitung an einen sanierten, d.h. einen ein eingezogenes Kunststoffrohr enthaltenden Sammelkanal. In Figur 2 wurde das Hausabflußrohr (6), welches am vorderen Ende mit einem Konus (7) versehen ist, bis zum Beginn des ersten Konusses (15) in die Muffe (1) hineingeschoben. Hausabflußrohr (6) und Muffe (1) wurden soweit durch das Sammlerrohr (8) und das Kunststoffrohr (Reliner) (9) geführt, bis der Wulst (4) fest am Sammlerrohr (8) anlag.

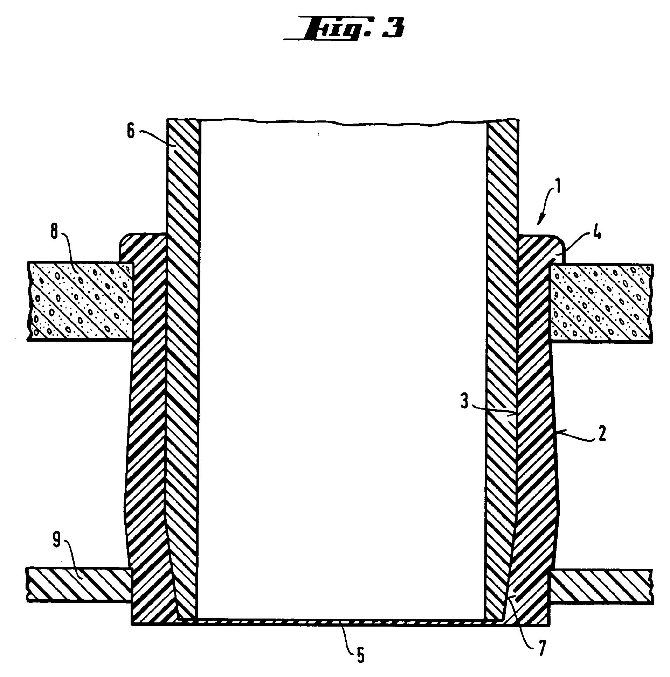

Figur 3 zeigt den Zustand in dem Augenblick, wo das Hausabflußrohr (6) beim Einschieben den zweiten Konus (16) erreicht hat. Dabei wurde bewirkt, daß im Bereich des ersten Konusses (15) eine Aufweitung in der Form stattfand und ein Kraftschluß zwischen Kunststoffrohr (9) und Muffe (1) hergestellt wurde.

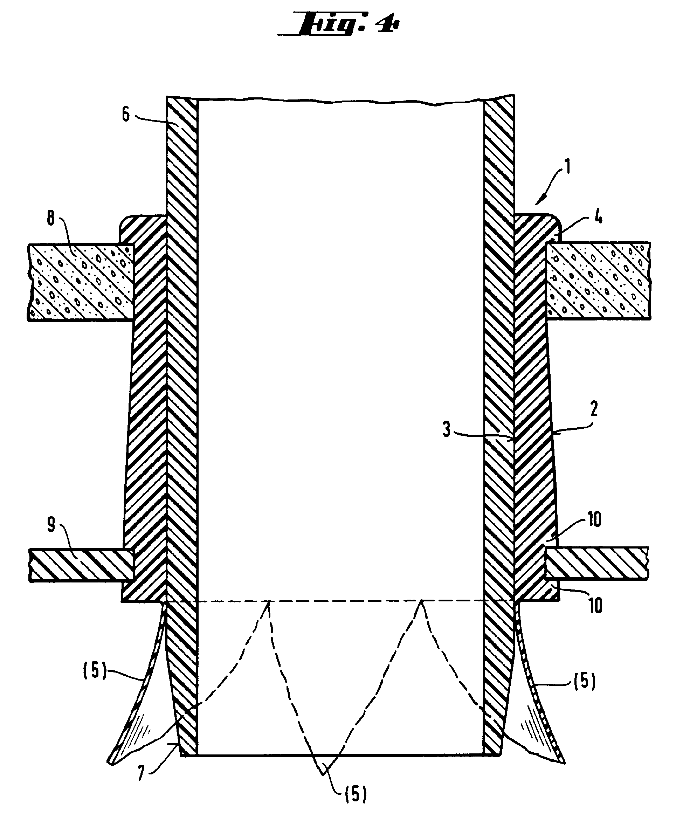

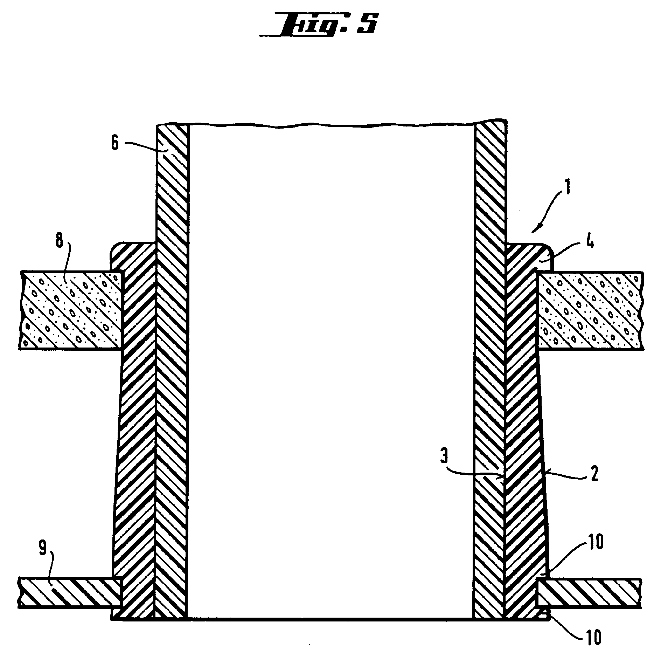

In Figur 4 ist das Hausabflußrohr (6) durch den zweiten Konus (16) der Muffe hindurchgeschoben worden und damit der Wulst (10) gebildet. Die überstehenden Enden von Rohr (6) und Muffe (1) wurden abgeschnitten, wie es Figur 5 zeigt. Da zur Bildung des Wulstes höhere Kräfte in Einschubrichtung aufgewendet werden müssen, ist die Steigung ($\beta$) des zweiten Konusses (16) zweckmäßigerweise mit etwa 1:50 kleiner als die Steigung ($\alpha$) des Konusses (15) mit etwa 1:25.

Die erfindungsgemäße Dichtungsmuffe bewirkt eine feuchtigkeits- und chemikalienbeständige Abdichtung zwischen dem Hausabflußrohr und dem Sammelkanalrohr. Die Verbindung ist etwas elastisch und kann daher eventuelle geringe Setzungen und Verschiebungen auffangen. Die Anwendung der Muffe ist einfach, so daß sichere Einbauergebnisse zu erwarten sind. Dabei bringt die Abschlußmembrane die Vorteile, daß sie als Anschlag für das Hausabflußrohr dienen kann und außerdem während der Montage kein Schmutz in die Hausablußleitung geraten kann. Die erfindungsgemäße Dichtungsmuffe ermöglicht eine Sanierung defekter Hausabflußleitungen ohne umfangreiche offene Erdarbeiten.

**Patentansprüche**

1. Dichtungsmuffe, bestehend aus einem rohrförmigen, außen zylindrischen Körper, dessen eine Seite

3

durch eine dünne elastische Membrane verschlossen ist, an dessen der Membrane gegenüberliegenden Seite ein nach außen vorspringender Wulst angebracht ist wobei die Wandstärke zur Membrane hin zunimmt, dadurch gekennzeichnet, daß die Innenwand im wesentlichen zwei abgestufte Konusse (15, 16) bildet, und die Steigung (β) des zweiten, an die Membrane angrenzenden Konusses (16) kleiner ist als die Steigung (α) des anderen Konusses (15).

2. Verwendung der Dichtungsmuffe gemäß Anspruch 1 als Abdichtung bei der Verbindung von Hausabflußleitungen mit Sammelkanälen.

3. Verfahren zum Verbinden einer Hausabflußleitung mit einem Sammelkanal, wobei man das zu verbindende Abflußrohr an dem dem Sammelkanal zugewandten Ende auf der Außenseite zu einem Konus abschrägt, das Rohr in eine Dichtungsmuffe, bestehend aus einem rohrförmigen, außen zylindrischen Körper, dessen eine Seite durch eine dünne elastische Membrane verschlossen ist, an dessen der Membrane gegenüberliegenden Seite ein nach außen vorspringender Wulst angebracht ist und dessen Innenwand im wesentlichen zwei abgestufte Konusse bildet, wobei die Wandstärke zur Membrane hin zunimmt und die Steigung (β) des zweiten, an die Membrane angrenzenden Konusses kleiner ist als die Steigung (α) des anderen Konusses , bis zum Beginn des ersten Konusses einführt, das Rohr mit der Dichtungsmuffe durch eine Bohrung in der Wand des Sammelkanals in den Kanal einschiebt, bis der Konus des Rohres die Muffe passiert hat, und die in den Sammelkanal hineinragenden Enden von Rohr und Muffe in einem ausreichenden Abstand von der Kanalinnenwand abtrennt.

## Claims

1. Sealing sleeve, comprising a tubular, externally cylindrical body, the one side of which is closed by a thin elastic diaphragm, and on the other side of which, opposite the diaphragm, an outwardly projecting bead is mounted, the wall thickness increasing towards the diaphragm, characterized in that the inside wall of the body forms essentially two stepped cones (15, 16) and the pitch (β) of the second cone (16), which adjoins the diaphragm, is smaller than the pitch (α) of the other cone (15).

2. Use of the sealing sleeve according to Claim 1 as a seal in the connection of domestic drainage conduits to collector sewers.

3. Method for connecting a domestic drainage conduit to a collector sewer, in which the drainage pipe to be connected is sloped on the outside at the end facing the collector sewer to form a cone, the pipe is inserted in a sealing sleeve, which comprises a tubular, externally cylindrical body, the one side of which is closed by a thin elastic diaphragm, and on the other side of which, opposite the diaphragm, an outwardly projecting bead is mounted, and the inside wall of which forms essentially two stepped cones, the wall thickness increasing toward the diaphragm, and the pitch (β) of the second cone, which adjoins the diaphragm, being smaller than the pitch (α) of the other cone, up to the beginning of the first cone, the pipe with the sealing sleeve is pushed into the sewer through a borehole in the wall of the collector sewer until the cone of the pipe has passed the sleeve, and the ends of the pipe and the sleeve protruding into the collector sewer are cut off at an adequate distance from the inside wall of the sewer.

## Revendications

1. Manchon d'étanchéité se composant d'un corps cylindrique externe tubulaire, dont un côté est obturé par une membrane élastique mince, sur le côté duquel disposé en face de la membrane est rapporté un bourrelet saillant, l'épaisseur de la paroi allant en augmentant dans la direction de la membrane, caractérisé en ce que la paroi intérieure du corps forme sensiblement deux cônes (15, 16) étagés, et en ce que l'inclinaison (β) du second cône (16) en contact avec la membrane, est inférieur à l'inclinaison (α) de l'autre cône (15).

2. Utilisation du manchon selon la revendication 1 dans l'étanchéification des raccordement de conduites de décharge domestique à des collecteurs.

3. Procédé de raccordement d'une conduite de décharge domestique à un collecteur, dans lequel on biseaute le tube de décharge à relier au niveau de son extrémité destinée à être en relation avec le collecteur et sur son côté extérieur jusqu'à former un cône, on introduit le tube dans un manchon d'étanchéité se composant d'un corps cylindrique externe tubulaire, dont un côté est obturé par une membrane élastique, sur le côté duquel disposé en face de la membrane est rapporté un bourrelet, vers l'extérieur et dont la paroi intérieure qui forme sensiblement deux cônes étagés, l'épaisseur de la paroi allant en augmentant dans la direction de la membrane, et l'inclinaison ($\beta$) du second cône en contact avec la membrane étant inférieure à l'inclinaison ($\alpha$) de l'autre cône, jusqu'au début du premier cône, on introduit le tube avec le manchon d'étanchéité à l'intérieur d'un alésage de la paroi du collecteur, jusqu'à ce que le cône du tube ait dépassé le manchon, et on sépare les extrémités du tube et du manchon pénétrant dans le collecteur, d'un écartement suffisant à partir de la paroi interne du canal collecteur.

## Fig. 1

# Fig. 2

Fig. 3

# Fig. 4

Fig. 5